# EUROPÄISCHE PATENTSCHRIFT

(11) **EP 2 666 664 B1**
(45) Veröffentlichungstag und Bekanntmachung des Hinweises auf die Patenterteilung: **02.04.2014**
(21) Anmeldenummer: 12168981.4
(22) Anmeldetag: 22.05.2012
(51) Int. Cl.: B60N 2/28

(54) **Kindersicherheitssitz für Fahrzeuge**
Child safety seat for vehicles
Siège de sécurité pour enfant pour véhicules automobiles

(43) Veröffentlichungstag der Anmeldung: 27.11.2013
(73) Patentinhaber: HAUCK GmbH & Co. KG, 96242 Sonnefeld (DE)
(72) Erfinder: Neuber, Tobias, 73035 Göppingen (DE); Unseld, Reinhold, 89176 Asselfingen (DE)
(74) Vertreter: Raffay & Fleck

(56) Entgegenhaltungen:
- EP-A2- 0 287 259
- EP-A2- 1 564 065
- DE-U1-202011 051 484
- US-A1- 2003 151 282

## Beschreibung

Die Erfindung betrifft einen Kindersicherheitssitz für Fahrzeuge mit dem Merkmalen des Oberbegriffs des Patentanspruches 1.

Derartige Kindersicherheitssitze sind aus dem Stand der Technik bekannt. Sie verfügen über eine Sitzfläche und eine sich an die Sitzfläche anschließende Rückenlehne für das in dem Kindersicherheitssitz aufzunehmende Kind. Ferner weisen sie Einrichtungen zum Festiegen des Kindersicherheitssitzes auf einem Fahrzeugsitz auf. Diese Einrichtungen können beispielsweise Aufnahmen für die fahrzeugeigenen Sicherheitsgurte sein, wenn der entsprechende Kindersicherheitssitz mittels eines derartigen fahrzeugeigenen Gurtes bzw. Gurtsystems am Fahrzeugsitze festgelegt wird. Auch sind Kindersicherheitssitze bekannt, die mit an den Fahrzeugsitzen bzw. am Fahrzeugchassis festgelegten, im Bereich der Fahrzeugstize Halteösen aufweisenden Befestigungssystemen gekoppelt werden können, wie dies beispielsweise durch das sogenannte ISOFIX-System gegeben ist. Schließlich gibt es Kindersicherheitssitze, die mittelbar mit einem Fahrzeugsitz verbunden bzw. an diesem festgelegt werden, indem zunächst eine Basis über die fahrzeugeigenen Gurte oder das ISOFIX-System oder eine vergleichbares System an dem Fahrzeugsitz festgelegt wird und der Kindersicherheitssitz anschließende mit der Basis verbunden wird, beispielsweise durch einen in der Basis und dem eigentlichen Sicherheitssitz ausgebildeten Rastsystem.

Ferner weisen derartige Kindersicherheitssitze ein eigenes Gurtsystem zum Anschnallen des in dem Sitz aufgenommenen Kindes auf. Derartige Gurteinrichtungen verfügen über wenigstens einen Schultergurt, welcher durch eine Öffnung in der Rückenlehne geführt ist und teilweise auf einer Rückseite der Rückenlehne verläuft. Die Rückenlehne lässt sich unterteilen in ein Lehnenelement und ein gegenüber diesem relativ verschiebbares Gurtführungsteil, wobei in dem Lehnenelement wenigstens ein sich in Längsrichtung der Rückenlehne erstreckender Längsschlitz und in dem Gurtführungsteil ein Gurtschlitz angeordnet sind. Durch Verlagerung des Gurtführungsteils in Längsrichtung der Rückenlehne wird die Höhe des Gurtschlitzes und damit die Austrittshöhe des wenigstens einen Schultergurtes, der durch den Gurtschlitz hindurch geführt ist, aus der Rückenlehne auf deren Vorderseite eingestellt und damit die Gurtposition an die Körpergröße des Kindes angepasst.

Da eine entsprechende Einstellung und Anpassung der Position des Gurtführungsteils so erfolgen muss, dass eine einmal eingestellte Position zuverlässig festgehalten wird, ist bei derartigen Kindersicherheitssitzen eine Verriegelungseinrichtung vorgesehen, die ein Riegelelement aufweist, welches durch eine Rückstellkraft in eine Riegelstellung vorgespannt ist, und welches ferner ein Betätigungselement zum Lösen des Riegelelementes aus seiner Riegelstellung und Ermöglichen einer Verlagerung des Gurtführungsteils aufweist. Bei gattungsgemäßen Kindersicherheitssitzen sind all diese Elemente vollständig auf einer Rückseite des Lehnenelementes angeordnet.

Vergleichbare Kindersicherheitssitze sind beispielsweise bekannt aus der EP 2 066 526 B1 sowie aus der US 6,030,047 und der US 6,491,348.

Bei den in dem genannten Stand der Technik offenbarten Kindersicherheitssitzen, bei denen es sich jeweils um Sitze für Kleinkinder, Sitze der sogenannten Gruppe 0/0+, bzw. der Gruppe 1 handelt, ist der Mechanismus zur Höhenverstellung der sitzeigenen Gurteinrichtung von der Rückseite des Kindersicherheitssitzes, genauer von der Rückseite der Rückenlehne her zu betätigen, wobei ein jeweiliges Betätigungselement an der Rückseite ergriffen werden muss, hierzu der Kindersicherheitssitz mit seiner Rückseite freizustellen und zugänglich zu machen ist.

Ein weiteres Beispiel eines Kindersicherheitssitzes, bei dem jedoch nicht alle Elemente der Verriegelungseinrichtung auf der Rückseite des Lehnenelementes angeordnet sind, ist in der EP 2 208 637 A1 gezeigt. Dort sind zu der Vorderseite des Lehnenelementes hin durchgeführte Entriegelungshebel vorgesehen, die von der Vorderseite des Kindersicherheitssitzes her betätigt werden können, um auch bei im Fahrzeug eingesetztem und damit mit seiner Rückseite nicht zugänglichem Kindersicherheitssitz eine Höhenverstellung der Gurteinrichtung vornehmen zu können. Damit wird hier zwar anders als bei den zuvor genannten aus dem Stand der Technik bekannten und gattungsgemäßen Lösungen eine Verstellung der Höhe des Gurtführungsteiles zur Anpassung der Gurteinrichtung an die Körpergröße des Kindes auch bei in dem Fahrzeug eingebautem Kindersicherheitssitz ermöglicht, allerdings liegen die Handgriffe als Teile der Entriegelungshebel, die anders als im gattungsgemäßen Stand der Technik nicht auf der Rückseite des Lehnenelementes angeordnet sind, seitlich bis in den Bereich hinein, in welchem der Kopf des in dem Kindersicherheitssitz aufgenommenen Kindes ruht und können im Extremfall bei einem seitlichen Aufprall eine eigene Verletzungsgefahr auslösen. Insoweit ist diese zuletzt beschriebene Lösung gemäß der EP 2 208 637 A1 als unvorteilhaft und nachteilig anzusehen.

Ein weiterer und gattungsgemäßer Kindersitz ist in der DE 20 2011 051 484 U1 offenbart. Bei dem dort gezeigten Kindersitz wird die Entriegelung einer Verriegelungseinrichtung zur Höhenverstellung der Gurteinrichtung und der damit verbundenen Kopfstütze durch ein Verschwenken einer in einem oberen Abschnitt auf der Vorderseite des Lehnenelementes angeordneten Kopfstützenplatte, ausgelöst durch Aufbringen einer nach vorn gerichteten Zugkraft auf das obere Ende der Kopfstütze, entriegelt. Zwar ist es bei diesem Kindersitz möglich, die Höheneinstellung der Gurteinrichtung (und der damit verbundenen Kopfstütze) bei in einem Auto bereits festgelegten Kindersitz und auch mit einem bereits im Kindersitz sitzenden Kind vorzunehmen, jedoch muss das Kind seinen Oberkörper dazu weit vorbeugen, um ein für das Entriegeln der Verriegelungseinrichtung erforderliches Verschwenken der Kopfstützenplatte nach vorn in Richtung des Kindes zu ermöglichen. Dies liegt daran, dass ein Teil der Verriegelungseinrichtung, nämlich der obere Abschnitt der verschwenkbaren Kopfstützenplatte, nicht auf der Rückseite des Kindersitzes angeordnet, sondern nach vorn verlegt ist. Dies führt dazu, dass ein Betätigen der Höhenverstellung der Gurteinrichtung dann, wenn ein Kind in dem Sitz bereits Platz genommen hat, umständlich ist, insbesondere, wenn der Innenraum in einem Fahrzeug, in dem das Kind in dem Kindersitz mit fahren soll, begrenzt ist, wie z.B. im Fond eines Kleinwagen.

Aufgabe der Erfindung ist es mithin, einen gattungsgemäßen Stand der Technik, wie er in der DE 20 2011 051 484 U1 offenbart ist, dahingehend weiterzuentwickeln, dass ohne die Verlegung von Elementen der Verriegelungseinrichtung von der Rückseite des Lehnenelementes an andere Orte eine Entriegelung der Verriegelungseinrichtung und mithin eine Verlagerung des Gurtführungsteils und Anpassung der Gurteinrichtung an die Körpergröße des in dem Kindersicherheitssitz aufgenommenen Kindes auch bei bereits im Fahrzeug angeordnetem Kindersicherheitssitz und auch bei schon in dem Kindersicherheitssitz sitzendem Kind einfach und zuverlässig möglich ist. Dazu soll die Verriegelungseinrichtung entsprechend konstruktiv gestaltet werden.

Diese Aufgabe wird gelöst durch einen Kindersicherheitssitz mit den Merkmalen des Patentanspruches 1. Vorteilhafte Weiterbildungen eines solchen erfindungsgemäßen Kindersicherheitssitzes sind in den abhängigen Ansprüchen 2 bis 11 angegeben.

Bei einem gattungsgemäßen Kindersicherheitssitz der eingangs beschriebenen Art ist also im Rahmen der Erfindung zunächst auch vorgesehen, dass das Betätigungselement ein auf der Rückseite des Lehnenelementes in Richtung dessen oberen Längsendes hin geführtes Zugelement ist, wobei durch Aufbringen einer Zugkraft auf das Zugelement das Riegelelement gegen die Rückstellkraft aus der Riegelstellung in eine Freigabestellung verbringbar ist, in der es eine Entriegelung der Verriegelungseinrichtung auslöst und so eine Verlagerung des Gurtführungsteils in Längsrichtung der Rückenlehne ermöglicht.

Ein solches in Richtung des oberen Endes des Lehnenelementes hin geführtes Zugelement kann auch bei im Fahrzeug bereits auf einem Fahrzeugsitz angeordnetem und dort festgelegtem Kindersicherheitssitz und auch bei einem darin bereits aufgenommenem Kind ergriffen werden, und es kann so mittels desselben durch Zugbetätigung die Verriegelungseinrichtung gelöst werden zur Einstellung der korrekten Höhenposition des Gurtführungsteils und Anpassung der Gurteinrichtung an die Körpergröße des Kindes. Damit ist es nicht nur nicht erforderlich, den Kindersicherheitssitz vom Fahrzeugsitz zu lösen, um eine entsprechende Einstellung vorzunehmen. Vielmehr kann die korrekte Gurthöheneinstellung vorgenommen werden, wenn das Kind in dem Kindersicherheitssitz bereits Platz genommen hat, so dass die Gurthöheneinstellung sehr exakt an die Körpermaße des Kindes angepasst und entsprechend vorgenommen werden kann, was insgesamt zu einer verbesserten Sicherheit des Kindes in dem Sitz beiträgt.

Dadurch, dass, wie erfindungsgemäß vorgesehen, die Verriegelungseinrichtung als Riegelelement eine durch wenigstens eine quer zu einer Tangentialebene zur Rückenlehne verlaufende, in einem fest mit diesem verbundenen Fortsatz des Gurtführungsteils ausgebildeten Längsschlitz geführte Riegelstange, wenigstens zwei in unterschiedlichen Längspositionen des Lehnenelementes ausgebildete Aufnahmen zum formschlüssigen Aufnehmen wenigstens eines Abschnittes der Riegelstange und einen an dem Gurtführungsteil relativ zu diesem in Längsrichtung der Rückenlehne verschiebbar angeordneten, einen jedenfalls abschnittsweise quer zu der Tangentialebene und zugleich quer zu dem Längsschlitz verlaufenden Kulissenführungsschlitz aufweisenden Kulissenschlitten umfasst, kann eine entsprechend mit einem Zugelement betätigbare Verriegelungseinrichtung einfach und zuverlässig gebildet werden.

Durch das Zusammenspiel der quer zu einer Tangentialebene der Rückenlehne in den Fortsätzen ausgebildeten Längsschlitze, die insbesondere im Wesentlichen senkrecht zu dieser Tangentialebene verlaufen können, und dem Kulissenführungsschlitz in dem Kulissenschlitten, der sowohl quer zur Erstreckungsrichtung des Längsschlitzes als auch quer zur Tangentialebene verläuft, kann bei einer entsprechenden Bewegung des Kulissenschlittens die sowohl durch den Längsschlitz als auch durch den Kulissenführungsschlitz hindurch geführte Riegelstange, die insbesondere einen kreisförmigen Durchmesser aufweisen kann, bei einer Verlagerung des Kulissenführungsschlittens je nach Richtung dieser Verlagerung in dem Längsschlitz auswärts, also von dem Lehnenelement weg bzw. einwärts, also zu diesem hin geführt werden. Dadurch ergibt sich ein Abheben der Riegelstange aus der wenigstens einen Aufnahme, in der diese in einer Riegelposition formschlüssig aufgenommen ist und ruht, bzw. ein Absenken der Riegelstange in eine solche Aufnahme zum Verriegeln in einer ausgewählten Position. Die durch die beschriebene Mimik gebildete Bewegungsumsetzungsmechanik erlaubt ein Übersetzen einer im Wesentlichen tangential zur Rückenlehne gerichteten Zugkraft bzw. einer entsprechenden Zugbewegung in eine quer, insbesondere weitgehend senkrecht dazu gerichtete Bewegung der Riegelstange aus wenigstens einer Aufnahme, in welcher sie in einer Riegelposition ruht, heraus bzw. in eine solche herein, wobei die Rückstellkraft die Riegelstange in die Aufnahme hinein zwingt. Dabei kann das Zugelement mit Vorteil unmittelbar an dem Kulissenschlitten festgelegt sein.

Dabei kann der Kulissenführungsschlitz zumindest in einem Abschnitt gekrümmt verlaufen. In dieser vorteilhaften Ausgestaltung unterscheidet sich der Kulissenführungsschlitz insbesondere von dem Längsschlitz, der sich insbesondere in gerader Linie erstreckt. Durch den gekrümmten Verlauf des Kulissenführungsschlitzes ergibt sich in dieser vorteilhaften Ausgestaltung eine resultierende Bewegung der Riegelstange, wobei durch die Art und den Verlauf der Krümmung diese Bewegung derart eingestellt werden kann, dass die Riegelstange zunächst langsam und seicht aus ihrer Verriegelungsposition gelöst und erst später mit gegenüber der Tangentialebene steiler werdendem Verlauf des Kulissenführungsschlitzes mit schnellerer Bewegung weiter von der Rückenlehne entfernt und aus der Riegelstellung abgehoben wird.

Das Zugelement kann jede beliebige und geeignete Form annehmen, beispielsweise die Form einer Zugstange, eines Zugseiles oder einer Zugkette. Besonders bevorzugt wird hierbei jedoch ein flaches Textilband bzw. ein textiler Gurt. Ein solches Band bzw. insbesondere ein solcher Gurt ist einerseits flexibel und führt nicht zu Verletzungsgefahren, auch dann nicht, wenn er in einem Bereich am oberen Ende des Lehnenelementes über dieses vorsteht. Auf der anderen Seite kann ein solcher Gurt bzw. ein solches Band auch hinreichend zugfest ausgebildet werden, dass er bzw. es stabil über einen langen Zeitraum und für eine hohe Anzahl von Betätigungszyklen hält.

Der Kulissenschlitten ist gemäß einer weiteren vorteilhaften Weiterbildung bevorzugt an dem Gurtführungsteil zwangsgeführt gesichert. Somit wird ein Abfallen oder sonstigen Lösen des Kulissenschlittens von dem Gurtführungsteil verhindert. Durch die Zwangsführung ist die Bewegungsrichtung des Kulissenschlittens vorgegeben.

Zur Begrenzung der Bewegungslinien des Kulissenschlittens können an dem Gurtführungsteil mit Vorteil Anschläge angeordnet sein, wie dies gemäß Anspruch 4 vorgesehen ist.

Der Kulissenführungsschlitz ist insbesondere in dem Kulissenschlitten so ausgebildet, dass er sich ausgehend von einem dem oberen Ende der Rückenlehne zugewandten oberen Ende des Kulissenschlittens hin zu einem dem unteren Ende der Rückenlehne zugewandten unteren Ende des Kulissenschlittens von der Rückseite des Lehnenelementes weg erstreckt. Diese Gestaltung und Führung des Kulissenschlittens ergibt ein zwangsgeführtes Bewegen der Riegelstange weg von dem Lehnenelement, wenn der Kulissenschlitten in Richtung des oberen Endes des Lehnenelementes bewegt, insbesondere mit dem an dem Kulissenschlitten festgelegten Zugelement gezogen wird.

Gemäß einer weiteren vorteilhaften Weiterbildung der Erfindung kann an dem Gurtführungsteil eine fest angeordnete Lagerkonsole vorgesehen sein sowie ein zwischen dieser Lagerkonsole und einer Stirnfläche am unteren Ende der Kulissenschlittens angeordnetes Federelement, welches der Aufbringung der Rückstellkraft auf das Riegelelement dient, indem es den Kulissenschlitten in Richtung des oberen Endes der Rückenlehne drückt, wodurch zwangsgeführt durch die Kulissenführung und den Längsschlitz die Riegelstange in Richtung der Rückseite des Lehnenelementes gezwungen wird in die wenigstens eine Aufnahme in der Riegelposition hinein. Das Federelement kann mit Vorteil eine Schraubenfeder sein.

Die Aufnahmen, in welchen die Riegelstange eingreifen und formschlüssig zur Verriegelung festgelegt werden können, können insbesondere und mit Vorteil wie in Anspruch 8 beschrieben ausgebildet sein. Demnach sind auf der Rückseite des Lehnenelementes zwei mit diesem fest verbundene und einander gegenüberliegende Aufnahmeleisten angeordnet, die sich im Wesentlichen in Längsrichtung der Rückenlehne erstrecken. In diesen Aufnahmeleisten sind jeweils zueinander korrespondierend auf gleicher Höhe eine Mehrzahl von Aufnahmen zur formschlüssigen Aufnahme der Riegelstange in unterschiedlichen Positionen entlang der Längsrichtung angeordnet bzw. ausgebildet. Ein Paar von jeweils auf gleicher Höhe angeordneten, jeweils in einer der Aufnahmeleisten ausgebildeten Aufnahmen bildet dann insgesamt die Aufnahme für die Riegelstange in einer Höhen- bzw. Verriegelungsposition des Gurtführungsteils.

Gemäß einer weiteren vorteilhaften Weiterbildung der Erfindung kann an dem Gurtführungsteil auf der Vorderseite des Lehnenelementes eine Kopfstütze angeordnet sein. Diese wird dann bei einer Höheneinstellung des Gurtführungsteils zugleich mit in Längsrichtung der Rückenlehne bewegt und in ihrer Höhe eingestellt und an eine Körpergröße des in dem Kindersicherheitssitz aufzunehmenden Kindes angepasst. Die Kopfstütze wird insoweit an die Position verschoben, an der der Kopf des Kindes bei entspannter und an die Rückenlehne angelehnter Körperhaltung ruht. Diese Kopfstütze weist mit Vorteil Seitenwangen für eine seitliche Sicherung des Kopfes des Kindes auf. Diese dienen insbesondere dem Abfangen von auf den Kopf des Kindes wirkenden seitlichen Kräften bei einem entsprechenden seitlichen Aufprall und Unfall. Die Kopfstütze kann an dem Gurtführungsteil mit Vorteil um eine im Wesentlichen in Querrichtung der Rückenlehne verlaufende Drehachse gelenkig festgelegt sein. Eine solche gelenkige Festlegung erlaubt eine Kippbewegung der Kopfstütze, bspw. zur Anpassung an eine Krümmung des Verlaufes der Rücklehne, wie sie insbesondere bei solchen Kindersicherheitssitzen der Gruppe O/O + häufig anzutreffen ist. Insbesondere wird durch eine solche gelenkige Anbindung aber auch die Sicherheit im Falle eines Unfalles verbessert. Dadurch kann sich nämlich bei einem Aufprall bzw. durch einen diesem nachfolgenden Rückimpuls der Kinderkopf mit der der Kopfstütze verlagern, und bei einer anschließenden Rückwärtsbewegung des Kopfes wird ein Auftreffen des Kopfes auf die bzw. in der Kopfstütze deutlich verbessert. Es ergibt sich insbesondere eine weitreichende Überdeckung der Seitenwangen der Kopfstütze mit dem Kopf des Kindes.

Das Gurtführungsteil kann mit Vorteil durch eine auf der Rückseite des Lehnenelementes angeordnete Gurtführungsplatte, in der die entsprechenden quer zum Verlauf der Längsschlitze ausgebildeten Gurtführungsschlitze angeordnet sind, gebildet sein.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine Seitenansicht eines Ausführungsbeispiels eines erfindungsgemäßen Kindersicherheitssitzes,
- Fig. 2: eine Draufsicht auf den Kindersicherheitssitz gemäß Fig. 1 bei maximal hoch eingestellten Gurtführungsteil und Kopfstütze,
- Fig. 3: eine perspektivische Ansicht des Kindersicherheitssitzes von hinten unten her in der Position der maximal hoch eingestellten Gurtführungsteil und Kopfstütze,
- Fig. 3a: eine vergrößerte Ausschnittsdarstellung der Verriegelungseinrichtung in der in Fig. 3 dargestellten Position,
- Fig. 4: eine Längsschnittdarstellung durch den Kindersicherheitssitz mit der maximal hoch eingestellten Kombination aus Gurtführungsteil und Kopfstütze,
- Fig. 4a: eine Ausschnittsdarstellung der Verriegelungseinrichtung aus Fig. 4,
- Fig. 5: eine Draufsicht auf den Kindersicherheitssitz mit in maximal niedriger Position eingestellten Gurtführungsteil und Kopfstütze,
- Fig. 6: eine perspektivische Ansicht von hinten unten auf den Kindersicherheitssitz in der Einstellung und Positionierung von Gurtführungsteil und Kopfstütze in maximal niedriger Position gemäß Fig. 5,
- Fig. 6a: eine Ausschnittsvergrößerung der Verriegelungseinrichtung aus Fig. 6,
- Fig. 7: eine Längsschnittdarstellung des Kindersicherheitssitzes in der Einstellung und Position von Gurtführungsteil und Kopfstütze gemäß Fig. 5,
- Fig. 7a: eine vergrößerte Ausschnittsdarstellung der Verriegelungseinrichtung aus Fig. 7,
- Fig. 8: eine perspektivische Ansicht von hinten unten des Kindersicherheitssitzes mit Gurtführungsteil und Kopfstütze in maximal hoher Position und mit durch Ziehen an dem Betätigungselement entriegelter Verriegelungseinrichtung,
- Fig. 8a: eine vergrößerte Ausschnittsdarstellung der Verriegelungseinrichtung aus Fig. 8,
- Fig. 9: eine Längsschnittdarstellung des Kindersicherheitssitzes mit Gurtführungsteil und Kopfstütze in maximal hoher Position und mit durch Ziehen an dem Betätigungselement in Entriegelungsstellung gebrachter Verriegelungseinrichtung und
- Fig. 9a: eine Ausschnittsdarstellung der Verriegelungseinrichtung gemäß Fig. 9.

In den Figuren ist anhand eines Ausführungsbeispiels in Form eines Kindersicherheitssitzes 1, der für eine feste und sichere Anordnung und den Transport eines Kleinkindes in einem Fahrzeug ausgelegt ist und der Gruppe 0/0+ zugehört, eine mögliche Realisierung eines erfindungsgemäßen Kindersicherheitssitzes für Fahrzeuge in unterschiedlichsten Ansichten und mit verschiedenen Positionen der dem Kindersicherheitssitz 1 eigenen Gurteinrichtung sowie seiner Verriegelungseinrichtung dargestellt. Selbstverständlich kann die Erfindung auch in einem Kindersicherheitssitz einer anderen Klasse, bspw. der Gruppe 1, realisiert werden.

Der Kindersicherheitssitz 1 gemäß dem Ausführungsbeispiel weist eine Sitzfläche 2 und eine sich an diese Sitzfläche 2 anschließende Rückenlehne 3 auf. Ein auf der Rückseite der Rückenlehne 3 angeordneter Gurthaken 4 sowie zwei seitlich angrenzend an die Sitzfläche 2 angeordnete Gurtaufnahmen 5 dienen in der üblichen und bekannten Weise der eingefädelten Aufnahme des Schultergurtabschnittes (in dem Gurthaken 4) sowie des Beckengurtabschnittes (durch die Gurtaufnahmen 5) eines im Fahrzeug befindlichen Dreipunktgurtes, um den Kindersicherheitssitz 1 so entgegen der Fahrtrichtung auf einem Fahrzeugsitz, z.B. auf dem Beifahrersitz oder einer Rückbank eines Fahrzeuges festzulegen.

Der Kindersicherheitssitz 1 verfügt ferner über eine an diesem selbst ausgebildete und dort angeordnete Gurteinrichtung, die nach Art von Hosenträgergurten ausgebildete Schultergurte 6 (hier nur in einem Ausschnitt angedeutet) sowie eine im Bereich der Sitzfläche 2 angeordnete, hier nicht dargestellte Gurtschnalle enthält.

In der Rückenlehne 3 sind zwei parallel und in Längsrichtung der Rückenlehne 3 verlaufende Längsschlitze 7 ausgebildet. Diese Längsschlitze 7 sind in einem starr mit der Sitzfläche 2 verbundenen Lehnenelement 8 gebildet. Auf der der Vorderseite der Rückenlehne 3, auf der ein in dem Kindersicherheitssitz 1 untergebrachtes Kind ruht, gegenüberliegenden Seite der Rückenlehne 3 ist ein Gurtführungsteil 9 angeordnet mit Gurtschlitzen 10, durch die die Schultergurte 6 von der Rückseite der Rückenlehne 3 her zu deren Vorderseite hin durchgeführt sind. An dem relativ zu dem Lehnenelement 8 in Längsrichtung der Rückenlehne 3 verschiebbar auf der Rückseite dieser Rückenlehne 3 angeordneten Gurtführungsteil 9 ist mit einer gelenkigen Anbindung eine Kopfstütze 11 angeordnet. Ein um eine Schwenkachse 12 verschwenkbarer Tragegriff 13 dient dem Erfassen und Transportieren des Kindersicherheitssitzes 1 in an sich bekannter Weise.

Auf der Rückseite der Rückenlehne 3 ist eine Verriegelungseinrichtung 14 ausgebildet, mittels derer das Gurtführungsteil 9 in unterschiedlichen möglichen Positionen relativ zu dem Lehnenteil 8 eingestellt und in Bezug zu letzterem in seiner Position fest verriegelt werden kann. Dabei umfasst das Gurtführungsteil 9 eine vollständig auf der Rückseite der Rückenlehne 3 angeordnete Deckplatte 15, welche die Längsschlitze 7 überdeckt.

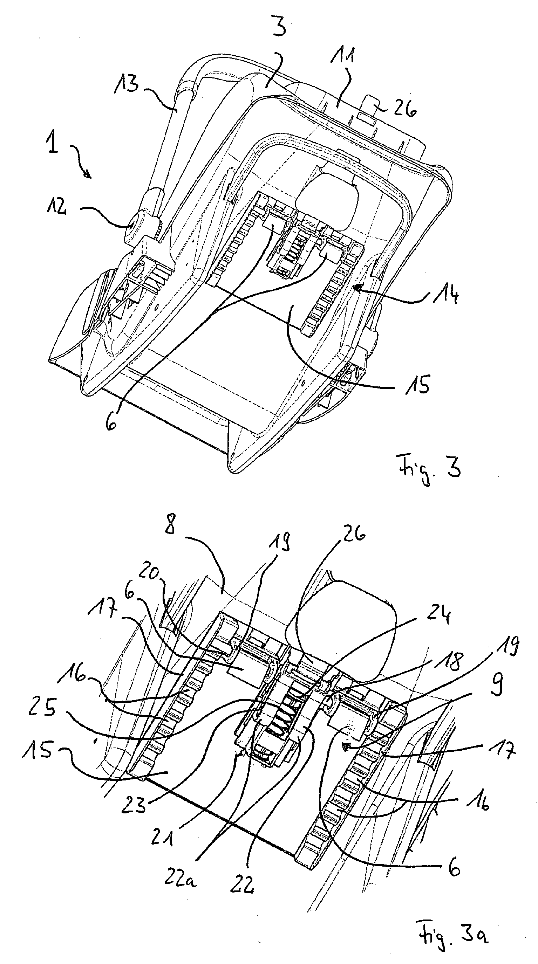

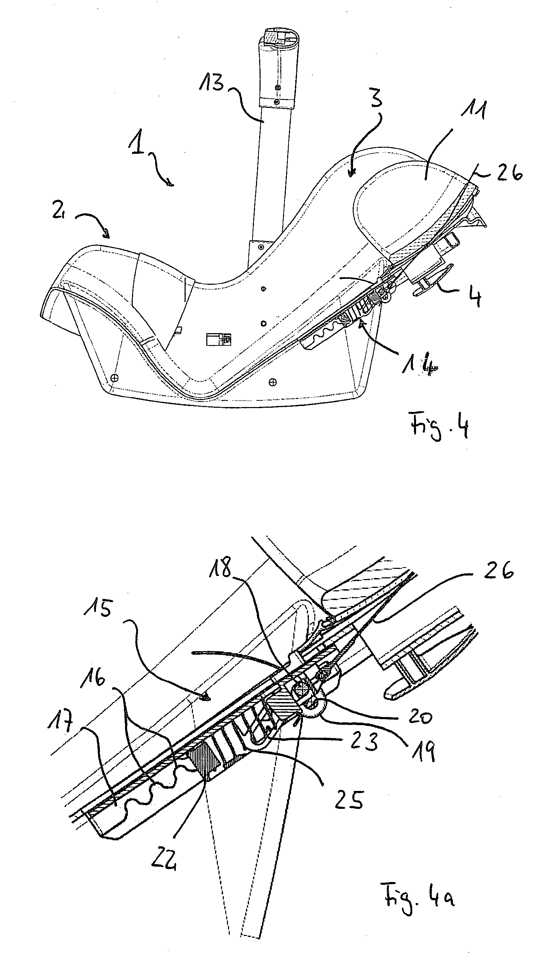

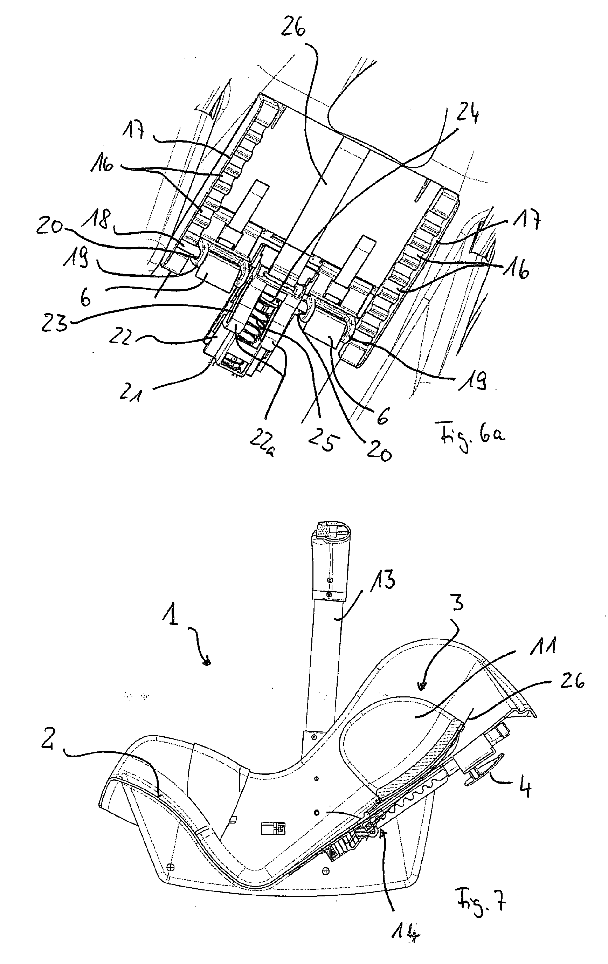

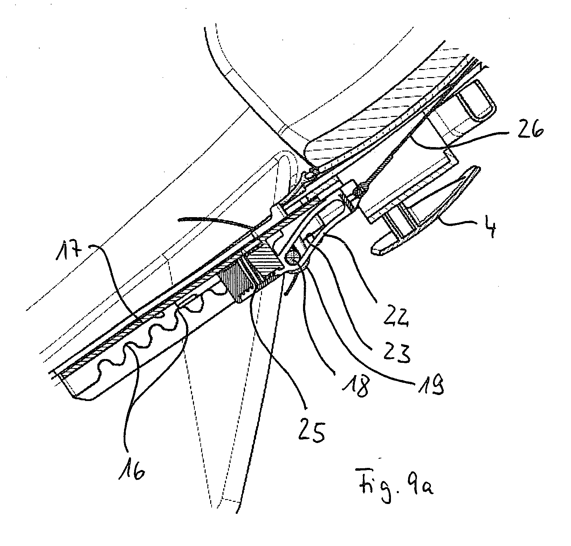

In den vergrößerten Darstellungen der Figuren 3a, 4a, 6a, 7a, 8a und 9a ist jeweils unterschiedlichen Stellungen und verschiedenen Ansichten die Verriegelungseinrichtung 14 in größerem Detail dargestellt. Insoweit im nachfolgenden die Verriegelungseinrichtung 14 näher beschrieben wird, wird insbesondere auf die soeben genannten Figuren verwiesen.

Die Verriegelungseinrichtung 14 weist zwei einander gegenüber liegende, in Längsrichtung der Rückenlehne 3 verlaufende, mit dem Lehnenelement 8 fest verbundene und jeweils auf gleicher Höhe einander gegenüber liegende Aufnahmekerben 16 aufweisende Aufnahmeleisten 17 auf. Sie umfasst ferner eine Riegelstange 18, die einen kreisrunden Durchmesser aufweist und mit ihren Enden jeweils in einer Aufnahmekerbe 16 der beiden Aufnahmeleisten 17 aufgenommen werden kann, um so gegen eine Längsbewegung zu verriegeln. Die Riegelstange 18 ist durch in mit der Abdeckplatte 15 des Gurtführungsteils 9 fest verbundenen Fortsätzen 19 ausgebildete Längsschlitze 20 hindurch geführt, wobei die Längsschlitze 20 und die Fortsätze 19 derart dimensioniert sind, dass die Riegelstange 18 in den Längsschlitzen 20 quer zur Ebene der Rückenlehne 3, insbesondere damit auch quer zur Abdeckplatte 15 soweit bewegt werden kann, dass sie vollständig aus den Aufnahmekerben 16 der Aufnahmeleisten 17 abgehoben ist und somit eine Relativverschiebung des Gurtführungsteils 9 gegenüber dem Lehnenteil 8 erlaubt.

In einer mit hier nicht näher dargestellten Anschlägen zur Bewegungsbegrenzung versehenen, an der Abdeckplatte 15 des Gurtführungsteils 9 ausgebildeten und mit dieser fest verbundenen Führung 21 ist ein relativ zu dieser Führung 21 und damit dem Gurtführungsteil 9 in Längsrichtung der Rückenlehne 3 bewegbarer Kulissenschlitten 22 angeordnet.

Der Kulissenschlitten 22 weist in diesem Ausführungsbeispiel zwei Schenkel 22a auf, in denen jeweils ein Kulissenführungsschlitz 23 ausgebildet ist. Durch diese Kulissenführungsschlitze 23 verläuft die Riegelstange 18 hindurch, wobei die Kulissenführungsschlitze 23 einen Verlauf aufweisen, der jedenfalls in einem Abschnitt quer zu der Längserstreckung der Längsschlitze 19 sowie quer zu der Tangentialebene der Rückenlehne 3, mithin auch quer zu der Ebene der Abdeckplatte 15 verläuft. Insbesondere ist der Verlauf der Kulissenführungsschlitze 23 gekrümmt.

Durch eine zwischen dem Kulissenschlitten 22 und einem fest mit der Abdeckplatte 15 verbundenen Widerlager 24 eingesetzte Schraubenfeder 25 wird der Kulissenschlitten 22 in eine maximal in Richtung der Sitzfläche 2 gelegene Position relativ zu der Abdeckplatte 15 und damit relativ zu dem Gurtführungsteil 9 gezwungen.

Die Schultergurte 6 verlaufen, wie durch eine nur ausschnittsweise gezeigte Darstellung erkennbar, auf der Rückseite der Rückenlehne 3 über die Riegelstange 18 hinweg und werden an dieser umgelenkt.

An dem Kulissenschlitten 22 ist ein Zuggurt 26 festgelegt. Dieser Zuggurt 26 ist mit einem dem an dem Kulissenschlitten 22 festgelegten Ende gegenüber liegenden, freien Ende durch die Kopfstütze 11 gefädelt und ragt dort auf der Rückseite dieses Elementes hervor.

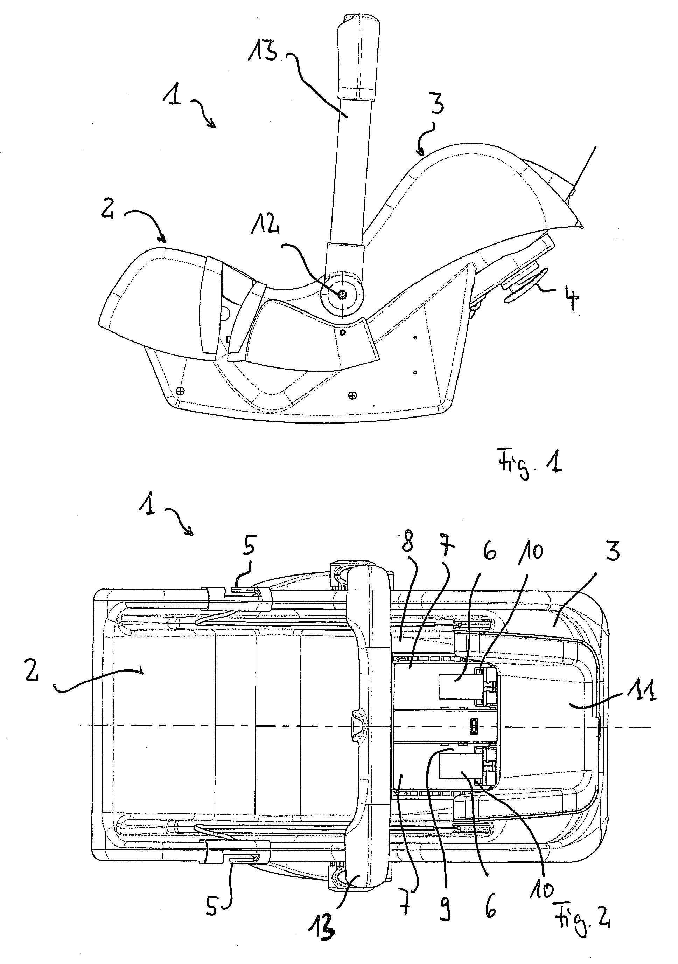

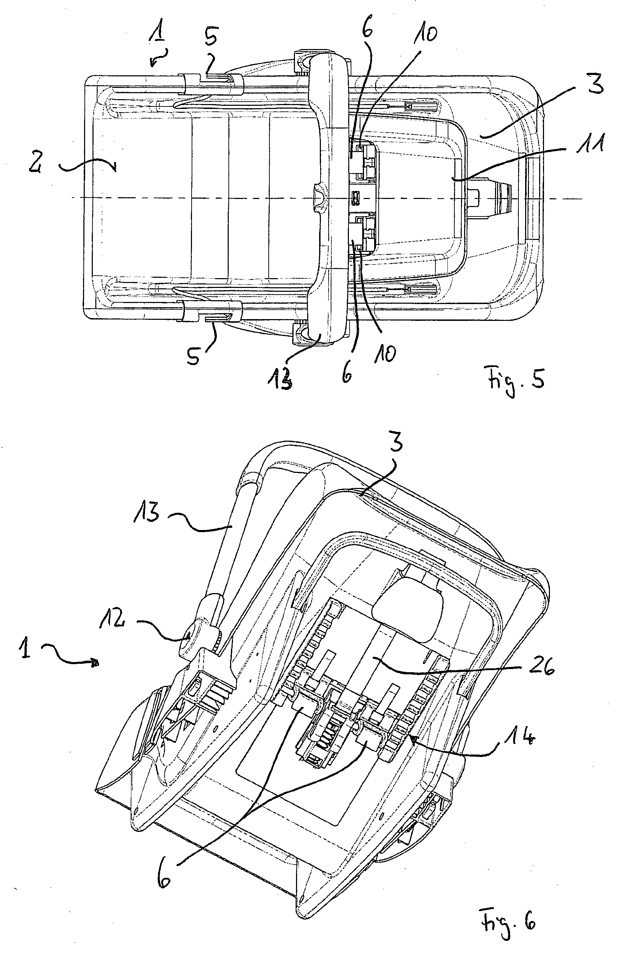

Durch Ziehen an dem Zuggurt 26 wird der Kulissenschlitten 22 entgegen der Federkraft der Schraubenfeder 25 relativ zu dem Gurtführungsteil 9, genauer zu der daran angeordneten und zu dem Gurtführungsteil gehörigen Abdeckplatte 15 in Richtung des oberen Endes der Rückenlehne 3 verschoben. Dadurch wird, gezwungen durch die in Richtung des unteren, zur Sitzfläche 2 hin gelegenen Endes des Kulissenschlittens 22 von der Rückseite der Rückenlehne 3 weg gerichtete, quer zur Ebene der Rückenlehne 3 verlaufende Führung des Kulissenführungsschlitzes 23 die Riegelstange 18 in den Längsschlitzen 20 nach außen zwangsgeführt und aus den Aufnahmekerben 16 der Aufnahmeleisten 17 heraus geführt. Nun kann das Gurtführungsteil 9 relativ zu dem Lehnenteil 8 in Längsrichtung der Lehne verschoben werden, bspw. aus einer in den Figuren 2 bis 4a gezeigten obersten Position in Richtung einer in den Figuren 5 bis 7a gezeigten untersten Position oder umgekehrt. Selbstverständlich kann das Gurtführungsteil 9 dabei auch in allen möglichen Zwischenstellungen arretiert werden, die durch die an unterschiedlichen Längspositionen der Aufnahmeleisten 17 ausgebildeten Aufnahmekerben 16 vorbestimmt sind. Wird der Zuggurt 26 entlastet, zwingt die Kraft der Schraubenfeder 25 den Kulissenschlitten 22 wieder in seine in Richtung der Sitzfläche 2 verschobene Grundstellung, in der der Kulissenführungsschlitz 23 einen nahe der Rückenlehne liegenden Verlauf hat, so dass die Riegelstange 18 in Richtung der Rückenlehne 3 gezwungen und in passende Aufnahmekerben 16 in den Aufnahmeleisten 17 hinein gedrückt und dort in der entsprechenden Verriegelungsstellung gehalten wird.

Aufgrund der Tatsachse, dass auf der Vorderseite der Rückenlehne 3 die Kopfstütze 11 and dem Gurtführungsteil 9 in Längsrictung der Rückenlehne 3 unverrückbar (lediglich in einer Richtung parallel zur Ersteckung der Riegelstange 18, also quer zur Längsrichtung der Rückenlehne 3 verschwenkbar) festgelegt ist, wird die Kopfstütze 11 bei der Einstellung der korrekten Lage des Gurtführungsteils 9 und damit des entsprechenden Abstandes der Gurtschlitze 10 und mithin der Austrittsposition der Schultergurte 6 zu der Sitzfläche 2 für eine entsprechende Anpassung and die Körpergröße des in dem Kindersicherheitssitz 1 aufzunehmenden Kindes mit justiert.

Der große Vorteil der erfindungsgemäßen Ausgestaltung besteht darin, dass auch bei in dem Fahrzeug installierten und festgelegten Kindersicherheitssitz 1 sowie in dem Kindersicherheitssitz 1 bereits eingesetztem Kind der Zuggurt 26 einfach ergriffen und mit diesem die Verriegelungseinrichtung 15 zur korrekten Justage der Position der Gurtschlitze 10 und damit des Abstandes des Durchtrittes der Schultergurte 6 durch die Rüchkenlehne 3 zur Sitzfläche 2 eingestellt werden kann und dies mit wenigen und einfach durchzuführenden Hangriffen. Soll der Abstand vergrößert werden, so kann zugleich mit dem Ziehen an dem Zuggurt 26 zum Entriegeln der Verriegelungsvorrichtung 15 auch eine in Richtung des oberen Endes der Rükenhlehne 3 weisende Verschiebung des Gurtführungsteils 9 und der damit verbundenen Kopfstütze 11 vorgenommen werden, z.B. um diese aus der in den Figuren 5 bis 7a gezeigten unteren Positonen in eine in den Figuren 3 bis 4a gezeigte obere Position oder eine beliebige Zwischenposition zu verlagern.

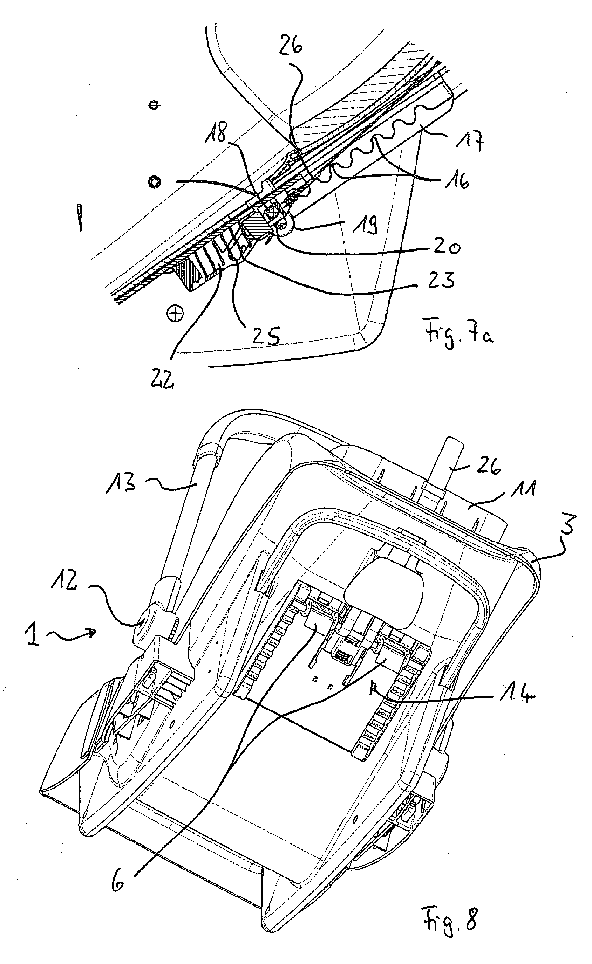

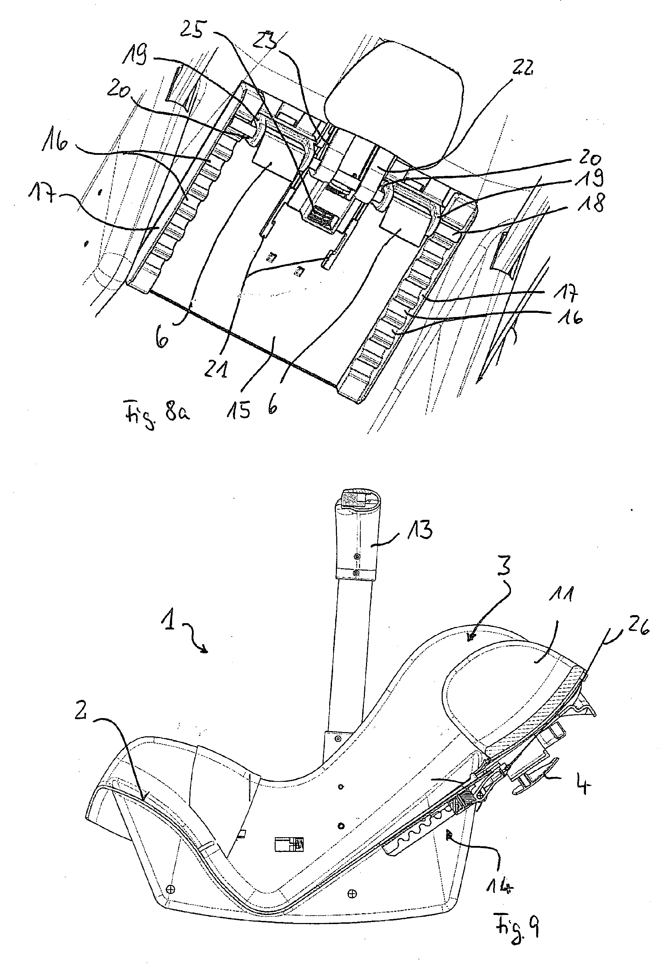

In den Figuren 8 bis 9a ist noch einmal die Situation gezeigt, in der der Kulissenschlitten 22 durch Aufbringen einer Zugkraft auf den Zuggurt 26 relativ zu dem Gurtführungsteil 9 und der daran angeordneten Abdeckplatte 15 in Richtung des oberen Endes der Rückenlehne 3 verschoben ist, so dass durch die Zwangsführung gebildet aus Kulissenführungsschlitzen 23 und Längsschlitzen 20, die Riegestange 18 von den Aufnahmeleisten 17 soweit abgehoben ist, dass sie über die Aufnahmekerben 16 hinweg gelangt und das Gurtführungsteil 9 relativ zum Lehnenteil 8 entriegelt.

### Bezugszeichenliste

- 1: Kindersicherheitssitz
- 2: Sitzfläche
- 3: Rückenlehne
- 4: Gurthaken
- 5: Gurtaufnahme
- 6: Schultergurt
- 7: Längsschlitz
- 8: Lehnenelement
- 9: Gurtführungsteil
- 10: Gurtschlitz
- 11: Kopfstütze
- 12: Schwenkachse
- 13: Tragegriff
- 14: Verriegelungseinrichtung
- 15: Abdeckplatte
- 16: Aufnahmekerbe
- 17: Aufnahmeleiste
- 18: Riegelstange
- 19: Fortsatz
- 20: Längsschlitz
- 21: Führung
- 22: Kulissenschlitten
- 22a: Schenkel
- 23: Kulissenführungsschlitz
- 24: Widerlager
- 25: Schraubenfeder
- 26: Zuggurt

## Patentansprüche

1. Kindersicherheitssitz für Fahrzeuge mit einer Sitzfläche (2), einer sich an die Sitzfläche (2) anschließenden Rückenlehne (3), Einrichtungen (4, 5) zum Festlegen des Kindersicherheitssitzes (1) auf einem Fahrzeugsitz eines Fahrzeuges und einer an dem Kindersicherheitssitz (1) angeordneten Gurteinrichtung zum Anschnallen eines Kindes in dem Kindersicherheitssitz (1), wobei die Gurteinrichtung wenigstens einen Schultergurt (6) aufweist, welcher durch eine Öffnung in der Rückenlehne (3) geführt ist, wobei die Öffnung sich in Kombination ergibt aus einem sich in Längsrichtung der Rückenlehne (3) erstreckenden Längsschlitz (7) in einem Lehnenelement (8) und einen Gurtschlitz (10) in einem Gurtführungsteil (9), wobei das Gurtführungsteil (9) zur Anpassung der Lage des Gurtschlitzes (10) an die Körpergröße eines Kindes in Längsrichtung der Rückenlehne (3) entlang des Lehnenelementes (8) und relativ zu diesem verlagerbar und in zumindest zwei unterschiedlichen Positionen mittels einer Verriegelungseinrichtung (14) lösbar an dem Lehnenelement (8) festlegbar ist, wobei die Verriegelungseinrichtung (14) vollständig auf einer Rückseite des Lehnenelementes angeordnet ist mit einem Betätigungselement (26), welches so angeordnet ist, dass es bei in dem Kindersicherheitssitz (1) sitzenden Kind hinter diesem liegt, und wobei die Verriegelungseinrichtung (14) ein mittels einer Rückstellkraft in eine Riegelstellung, in welcher es ein Verlagern des Gurtführungsteils (9) relativ zu dem Lehnenelement (8) verhindert, vorgespanntes Riegelelement (18) aufweist, wobei das Betätigungselement (26) mit dem Riegelelement (18) wirkverbunden ist zum Lösen des Riegelelementes (18) aus der Riegelstellung, wobei das Betätigungselement (26) ein in Richtung zu dem oberen Längsende des Lehnenelementes (8) hin geführtes Zugelement ist, wobei durch Aufbringen einer Zugkraft auf das Zugelement das Riegelelement (18) gegen die Rückstellkraft aus der Riegelstellung in eine Freigabestellung verbringar ist, in der es eine Entriegelung der Verriegelungseinrichtung (14) auslöst und so eine Verlagerung des Gurtführungsteils (9) in Längsrichtung der Rückenlehne (3) ermöglicht, **dadurch gekennzeichnet, dass** das Betätigungselement auf der Rückseite des Lehnenelementes (8) geführt ist und dass die Verriegelungseinrichtung (14) als Riegelelement (18) eine durch wenigstens eine quer zu einer Tangentialebene zur Rückenlehne (3) verlaufende, in einem fest mit diesem verbundenen Fortsatz (19) des Gurtführungsteils (9) ausgebildeten Längsschlitz (20) geführte Riegelstange, wenigstens zwei in unterschiedlichen Längspositionen des Lehnenelementes (8) ausgebildete Aufnahmen (16) zum formschlüssigen Aufnehmen wenigstens eines Abschnittes der Riegelstange und einen an dem Gurtführungsteil (9) relativ zu diesem in Längsrichtung der Rückenlehne (3) verschiebbar angeordneten, einen jedenfalls abschnittweise quer zu der Tangentialebene und zugleich quer zu dem Längsschlitz (20) verlaufenden Kulissenführungsschlitz (23) aufweisenden Kulissenschlitten (22) umfasst.

2. Kindersicherheitssitz nach Anspruch 1, **dadurch gekennzeichnet, dass** der Kulissenführungsschlitz (23) zumindest in einem Abschnitt gekrümmt verläuft.

3. Kindersicherheitssitz nach einem der vorhergehenden Ansprüche, **dadurch gekennzeichnet, dass** der Kulissenschlitten (22) an dem Gurtführungsteil (9) zwangsgeführt gesichert ist.

4. Kindersicherheitssitz nach einem der vorhergehenden Ansprüche, **gekennzeichnet durch** an dem Gurtführungsteil (9) angeordnete Anschläge zur Begrenzung der Längsbewegung des Kulissenschlittens (22).

5. Kindersicherheitssitz nach einem der vorhergehenden Ansprüche, **dadurch gekennzeichnet, dass** der Kulissenführungsschlitz (23) sich ausgehend von einem dem oberen Ende der Rückenlehne (3) zugewandten oberen Ende des Kulissenschlittens (22) hin zu einem dem unteren Ende der Rückenlehne (3) zugewandten unteren Ende des Kulissenschlittens (22) von der Rückseite des Lehnenelementes (8) weg erstreckt.

6. Kindersicherheitssitz nach Anspruch 5, **gekennzeichnet, durch** ein zwischen einem an dem Gurtführungsteil (9) fest angeordneten Widerlager (24) und einer Stirnfläche am unteren Ende des Kulissenschlittens (22) angeordnetes Federelement (25) zum Aufbringen der Rückstellkraft, welche in Richtung des unteren Endes der Rückenlehne (3) gerichtet ist.

7. Kindersicherheitssitz nach Anspruch 6, **gekennzeichnet durch** eine Schraubenfeder als Federelement (25).

8. Kindersicherheitssitz nach einem der vorhergehenden Ansprüche, **gekennzeichnet durch** zwei einander gegenüberliegend auf der Rückseite des Lehnenelementes (8) angeordnete, mit letzterem fest verbundene und im Wesentlichen in Längsrichtung der Rückenlehne (3) verlaufende Aufnahmeleisten (17), in denen jeweils zueinander korrespondierend auf gleicher Höhe eine Mehrzahl von Aufnahmen (16) zur formschlüssigen Aufnahme der Riegelstange (18) in unterschiedlichen Positionen entlang der Längsrichtung angeordnet sind.

9. Kindersicherheitssitz nach einem der vorhergehenden Ansprüche, **dadurch gekennzeichnet, dass** an dem Gurtführungsteil (9) auf der Vorderseite des Lehnelementes (8) eine Kopfstütze (11) angeordnet ist.

10. Kindersicherheitssitz nach Anspruch 9, **dadurch gekennzeichnet, dass** die Kopfstütze (11) an dem Gurtführungsteil (9) um eine im Wesentlichen in Querrichtung der Rückenlehne verlaufenden Drehachse gelenkig an dem Gurtführungsteil (9) festgelegt ist.

11. Kindersicherheitssitz nach einem der vorhergehenden Ansprüche, **gekennzeichnet durch** eine auf der Rückseite des Lehenelementes (8) angeordnete Platte (15) als Bestandteil des Gurtführungsteils (9).

## Claims

1. A child safety seat for vehicles with a seating surface (2), a backrest (3) connected to the seating surface (2), devices (4, 5) for fastening the child safety seat (1) on a seat of a vehicle and a belt device arranged on the child safety seat (1) for securing a child in the child safety seat (1), whereas the belt device presents at least one shoulder belt (6), which is guided through an opening in the backrest (3), whereas the opening results from a combination of a longitudinal slot (7) extending in longitudinal direction of the backrest (3) in a reclining element (8) and a belt slot (10) in a belt guide piece (9), whereas the belt guide piece (9) can be moved for adapting the position of the belt slot (10) to the body size of a child in longitudinal direction of the backrest (3) along the reclining element (8) and with respect to said element and can be locked releasably to the reclining element (8) in at least two different positions by means of a locking system, whereas the locking system (14) is arranged completely on a back of the reclining element with an actuating element (26) which is mounted in such a way that it lies behind the child when the latter is sitting in the child safety seat (1), and whereas the locking system (14) presents a locking element (18) which is prestressed by means of a reset force into a locking position in which it prevents the belt guide piece (9) from moving with respect to the reclining element (8), whereas the actuating element (26) is operatively connected with the locking element (18) to release the locking element (18) from the locking position, whereas the actuating element (26) is a traction member guided in a direction to the upper longitudinal end of the reclining element (8), whereas by applying a traction force on the traction member the locking element (18) can be brought into a release position against the reset force from the locking position, in which it releases the locking system (14) and thus enables to move the belt guide piece (9) in longitudinal direction of the backrest (3), **characterised in that** the actuating element is guided on the back of the reclining element (8) and that the locking system (14) comprises as a locking element (18) slide carriages containing a locking bar guided via at least one locking bar extending perpendicular to a tangential plane to the backrest (3), in a longitudinal slot (20) formed fixedly with said extension (19) of the belt guide piece (9) connected therewith, at least two receptacles (16) formed in different longitudinal positions for accommodating at least one section of the locking bar in a positive locking manner and a slide guiding slot (23) extending respectively in sections perpendicular to the tangential plane and simultaneously perpendicular to the longitudinal slot (20), arranged moveable on the belt guide piece (9) relatively thereto in longitudinal direction of the backrest (3).

2. A child safety seat according to claim 1, **characterised in that** the slide guiding slot (23) extends curved at least in a section.

3. A child safety seat according to any of the preceding claims, **characterised in that** the slide carriage is secured and forcibly guided to the belt guide piece (9).

4. A child safety seat according to any of the preceding claims, **characterised by** stops mounted on the belt guide piece (9) to limit the longitudinal movement of the slide carriage (22).

5. A child safety seat according to any of the preceding claims, **characterised in that** the slide guiding slot (23) extends from an upper end of the slide carriage (22) facing the upper end of the backrest (3) towards to a lower end of the slide carriage (22) from the back of the reclining element (8) facing the lower end of the backrest (3).

6. A child safety seat according to claim 5, **characterised by** a spring element (25) arranged between a thrust bearing (24) arranged fixedly to the belt guide piece (9) and a front face on the lower face of the slide carriage (22) to apply the recall force which is arranged in the direction of the lower end of the backrest (3).

7. A child safety seat according to claim 6, **characterised by** a helical spring as a spring element (25).

8. A child safety seat according to any of the preceding claims, **characterised by** two holding strips (17), arranged opposite one another on the back of the reclining element (8), fixedly connected to the latter and running substantially in longitudinal direction of the reclining element (3), in which respectively a plurality of receptacles (16) are arranged, corresponding to each other at the same height for receiving the locking bar (18) in a positively locking manner in different positions along the longitudinal direction.

9. A child safety seat according to any of the preceding claims, **characterised in that** a headrest (11) is arranged on the belt guide piece (9) on the front side of the reclining element (8).

10. A child safety seat according to claim 9, **characterised in that** the headrest (11) is fixed to the belt guide piece (9) around a rotational axis running essentially in perpendicular direction of the backrest in an articulated manner on the belt guide piece (9).

11. A child safety seat according to any of the preceding claims, **characterised by** a plate (15) arranged on the back of the reclining element (8) as integral part of the belt guide piece (9).

## Revendications

1. Siège de sécurité pour enfant pour véhicules avec une surface d'assise (2), un dossier (3) relié à la surface d'assise (2), des dispositifs (4, 5) pour fixer le siège de sécurité pour enfant (1) sur un siège de véhicule et un dispositif de ceinture améngagé sur le siège de sécurité pour enfant (1) pour sécuriser un enfant dans le siège de sécurité pour enfant (1), où le dispositif de ceinture présente au moins une bandoulière (6), qui est guidée à travers une ouverture dans le dossier (3), où l'ouverture résulte d'une combinason de fente longitudinale (7) s'étendant dans la direction longitudinale du dossier (3) dans un élément inclinable (8) et une fente de ceinture (10) dans une partie guide ceinture (9), où la partie guide ceinture (9) peut être déplacée pour adapter la position de la fente de ceinture (10) à la taille de l'enfant dans la direction longitudinale du dossier (3) le long de l'élément inclinable (8) et par rapport audit élément et peut être verrouillé de manière détachable à l'élément inclinable (8) dans au moins deux positions différentes au moyen d'un système de verrouillage, où le système de verrouillage (14) est aménagé complètement sur le dos de l'élément inclinable avec un élément d'actionnement (26) qui est monté de façon à reposer derrière l'enfant lorsque celui-ci est assis dans le siège de sécurité pour enfant (1), et où le système de verrouillage (14) présente un élément de verrouillage (18) précontraint à l'aide d'une force de rappel pour l'amener en position de verrouillage dans laquelle il empêche la partie guide ceinture (9) de bouger par rapport à l'élément inclinable (8), où l'élément d'actionnement (26) est connecté de manière opérationnelle avec l'élément de verrouillage (18) pour libérer l'élément de verrouillage (18) de la position de verrouillage, où l'élément d'actionnement (26) est un élément de traction guidé dans une direction vers l'extrémité longitudinale supérieure de l'élément inclinable (8), où en appliquant une force de traction sur l'élément de traction, l'élément de verrouillage (18) peut être amené en position de déverrouillage contre la force de réinitialisation à partir de la position de verrouillage, dans laquelle il libère le système de verrouillage (14) et permet ainsi de déplacer la partie guide ceinture (9) dans la direction longitudinale du dossier (3), **caractérisé en ce que** l'élément d'actionnement est guidé sur le dos de l'élément inclinable (8) et que le système de verrouillage (14) comprend en guise d'élément de verrouillage (18) des chariots coulissants contenant une barre de verrouillage guidée par au moins une barre de verroillage s'étendant perpendiculaire à un plan tangentiel au dossier (3), dans une fente longitudinale (20) solidaire de ladite rallonge (19) de la partie guide ceinture (9) connectée à cette dernière, au moins deux réceptacles (16) formés dans des positions longitudinales différentes pour recevoir au moins une section de la barre de verrouillage par engagement positif et une fente de guidage coulissante (23) s'étendant respectivement dans des sections perpendiculaires au plan tangentiel et simultanément perpendiculaires à la fente longitudinale (20) disposée pour se déplacer sur la partie guide ceinture (9) par rapport à cette dernière dans la direction longitudinale du dossier (3).

2. Siège de sécurité pour enfant selon la revendication 1, **caractérisé en ce que** la fente de guidage coulissante (23) s'étend de manière incurvée au moins dans une section.

3. Siège de sécurité pour enfant selon l'une quelconque des revendications précédentes, **caractérisé en ce que** le chariot coulissant est solidement en place et guidé de force vers la partie guide ceinture (9).

4. Siège de sécurité pour enfant selon l'une quelconque des revendications précédentes, **caractérisé par** des butées montées sur la partie guide ceinture (9) pour limiter le mouvement longitudinal du chariot coulissant (22).

5. Siège de sécurité pour enfant selon l'une quelconque des revendications précédentes, **caractérisé en ce que** la fente de guidage coulissante (23) s'étend à partir d'une extrémité supérieure du chariot coulissant (22) faisant face à l'extrémité supérieure du dossier (3) vers une extrémité inférieure du chariot coulissant (22) depuis le dos de l'élément inclinable (8) faisant face à l'extrémité inférieure du dossier (3).

6. Siège de sécurité pour enfant selon la revendication 5, **caractérisé par** un élément à ressort (25) disposé entre un palier de butée (24) fixé à demeure sur la partie guide ceinture (9) et une face avant sur la face inférieure du chariot coulissant (22) pour appliquer la force de rappel qui est disposée dans la direction de l'extrémité inférieure du dossier (3).

7. Siège de sécurité pour enfant selon la revendication 6, **caractérisé par** un ressort hélicoïdal comme élément à ressort (25).

8. Siège de sécurité pour enfant selon l'une quelconque des revendications précédentes, **caractérisé par** deux bandes de retenue (17), disposées l'une en face de l'autre au dos de l'élément inclinable (8), fixé à demeure sur celles-ci et s'étendant essentiellement dans la direction longitudinale de l'élément inclinable (3), dans lequel respectivement une pluralité de réceptacles (16) sont disposés pour se correspondre l'un à l'autre à la même hauteur et pour recevoir la barre de verrouillage (18) de manière positive dans différentes positions dans la direction longitudinale.

9. Siège de sécurité pour enfant selon l'une quelconque des revendications précédentes, **caractérisé en ce qu'**un repose-tête (11) est disposé sur la partie guide ceinture (9) sur la partie avant de l'élément inclinable (8).

10. Siège de sécurité pour enfant selon la revendication 9, **caractérisé en ce que** le repose-tête (11) est fixé à la partie guide ceinture (9) autour d'un axe de rotation s'étendant essentiellement dans la direction perpendiculaire du dossier de manière articulée sur la partie guide ceinture (9).

11. Siège de sécurité pour enfant selon l'une quelconque des revendications précédentes, **caractérisé par** une plaque (15) disposé au dos de l'élément inclinable (8) comme partie intégrante de la partie guide ceinture (9).
